# EUROPEAN PATENT APPLICATION

(11) **EP 4 576 500 A1**
(43) Date of publication of application: **25.06.2025**
(21) Application number: 24220498.0
(22) Date of filing: 17.12.2024
(51) Int. Cl.: H02K 1/22, H02K 21/04

(54) **ELECTRIC MOTOR FOR AUTO-TRACTION AND ROAD VEHICLE PROVIDED WITH SUCH MOTOR**

(30) Priority: 18.12.2023 IT 202300027015
(71) Applicant: FERRARI S.p.A., 41100 Modena (IT)
(72) Inventor: PASQUALE, Stefano, 41100 Modena (IT); QUONDAM ANTONIO, Simone, 41100 Modena (IT); DE BENEDITTIS, Giacomo, 41100 Modena (IT); TRANSI, Tommaso, 41100 Modena (IT); KOHLER, Roman, 41100 Modena (IT); FERRARA, Davide, 41100 Modena (IT); GAMBA, Matteo, 41100 Modena (IT)
(74) Representative: Studio Torta S.p.A.

(57) **Abstract**

Auto-traction electric motor (1) comprising: a stator (4) that is adapted to generate a rotating magnetic field when travelled by an electric current; and a rotor (3), which is accommodated in axially rotatable manner and with clearance in the stator (4) so as to be driven into rotation by the latter about its longitudinal axis (A), and in turn comprising: a central core (11), which extends coaxial to said longitudinal axis (A) and is capable of rotating about said longitudinal axis (A); a series of permanent magnets (12) that are distributed along the periphery of said central core (11), so as to create a radial magnetic field; and a series of supplementary electric coils (13), which are distributed on the periphery of said central core (11) so as to be interspersed between said permanent magnets (12), and are oriented so that each supplementary electric coil (13) generates, when travelled by an electric current, a tangential magnetic field.

## Description

### CROSS-REFERENCE TO RELATED PATENT APPLICATIONS

This application claims priority from Italian Patent Application No. 102023000027015 filed on December 18, 2023, the entire disclosure of which is herein incorporated by reference.

### TECHNICAL FIELD

The present invention relates to an electric motor for auto-traction and to a road vehicle provided with such motor.

More in detail, the present invention preferably relates to an electric motor for high-performance electric- or hybrid- propulsion cars, to which the following disclosure will make explicit reference without thereby losing generality.

### STATE OF THE ART

As is known, electric- or hybrid- propulsion cars currently on the market are equipped with an electric or hybrid powertrain, which is adapted to drive into rotation the ground resting wheels; with a rechargeable battery pack, which is capable of storing, inside itself, a certain amount of electric energy to be supplied to the electric or hybrid powertrain; and with at least one electronically-controlled inverter, which is interposed between the battery pack and the powertrain and is adapted to transform, depending on the commands given by the driver of the vehicle, the direct-current electric energy coming from the battery pack into alternating-current electric energy suitable for the electric motor(s) of the powertrain.

At present, the electric motors for auto-traction that provide the best performance and are most commonly used in electric- or hybrid- propulsion cars are the radial-flux three-phase electric motors with permanent magnets.

The rotor of the three-phase permanent-magnet electric motors usually comprises: a substantially cylindrical-shaped central core, which is made of ferromagnetic material and is rigidly fitted to the motor drive shaft so as to rotate together with the latter; a series of permanent magnets, which are evenly distributed on the outer periphery of the central core, so as to create a radial magnetic field that interacts with the rotating magnetic field generated by the electrical windings of the stator; and a plastic or composite material, outer jacket that encloses the entire outer periphery of the central core, covering also the permanent magnets.

To increase the power density, some manufacturers of electric motor have recently put on the market three-phase electric motors wherein the permanent magnets are distributed on the periphery of the central core of the rotor according to the Halbach configuration, which allows to strength the magnetic field at the air gap.

Unfortunately, the use of the Halbach configuration makes the rotor assembling very complicated. In fact, the permanent magnets are arranged in a configuration of direct or almost direct repulsion of each other, with all the problems of reciprocal approach that this entails.

In addition, due to this spatial distribution, the permanent magnets of a same rank tend to demagnetise the permanent magnets of the adjacent ranks, with all the problems this entails when the electric motor reaches high temperatures.

The permanent magnets, in fact, lose their magnetic properties (demagnetisation) at high temperatures and the Halbach configuration brings forward this phenomenon, because the individual permanent magnets are subject to a strong demagnetising action by the adjacent permanent magnets.

### SUMMARY OF THE INVENTION

Aim of the present invention is to realise an auto-traction electric motor, which can overcome the aforementioned drawbacks and is moreover more efficient and performance enhancing.

In accordance with the above aims, according to the present invention there is provided an electric motor for auto-traction as defined in Claim 1 and preferably, though not necessarily, in any of the claims dependent thereon.

According to the present invention there is moreover provided an electric- or hybrid- propulsion road vehicle as defined in Claim 12.

### BRIEF DESCRIPTION OF THE DRAWINGS

The present invention will now be described with reference to the accompanying drawings, which show a nonlimiting embodiment thereof, wherein:
- Figure 1 is a perspective and schematic view of an electric- or hybrid- propulsion car equipped with an auto-traction electric motor realized according to the teachings of the present invention, with parts in transparency and parts removed for clarity's sake;
- Figure 2 is a perspective and partially exploded view of the auto-traction electric motor equipping the car shown in Figure 1, with parts in section and parts removed for clarity's sake;
- Figure 3 is a perspective view of the rotor of the electric motor shown in Figure 2, with parts in section and parts removed for clarity's sake;

- Figure 4 is a perspective and partially exploded view of the rotor shown in Figure 3, with parts removed for clarity's sake;
- Figure 5 is a partially exploded front view of the rotor shown in Figures 3 and 4, sectioned along a plane orthogonal to the motor rotation axis and with parts removed for clarity's sake;
- Figure 6 is a sectional view of the rotor shown in Figures 3, 4 and 5, which schematically shows a first operating mode of the rotor; whereas
- Figure 7 is a sectional view of the rotor shown in Figures 3, 4 and 5, which schematically shows a second operating mode of the rotor.

### DETAILED DESCRIPTION OF THE EMBODIMENTS

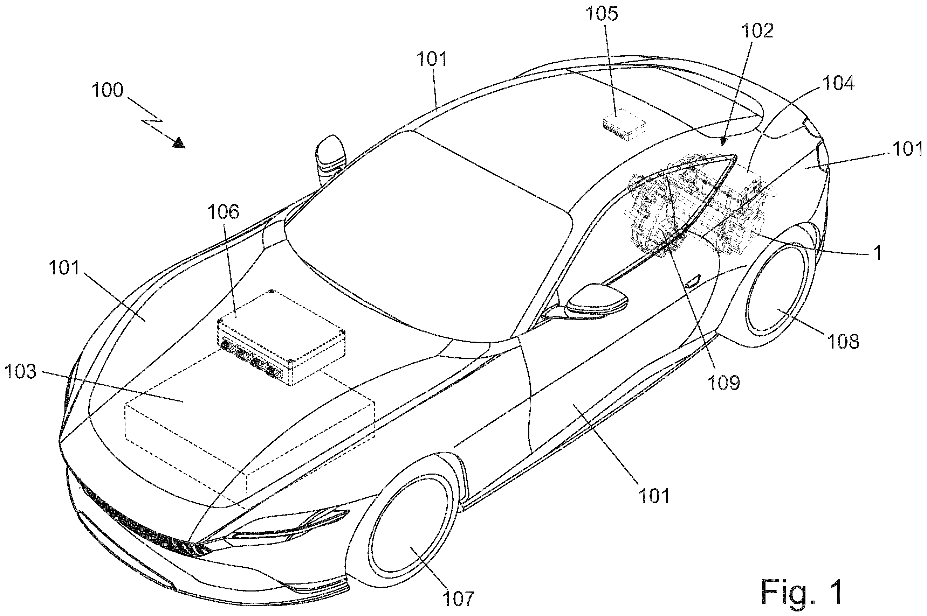

With reference to Figure 1, number 1 denotes as a whole an auto-traction electric motor that is particularly adapted for use in an electric- or hybrid- propulsion road vehicle 100. The road vehicle 100 in addition can advantageously be used for transporting things and/or people.

More in detail, the road vehicle 100 preferably comprises: a supporting body 101 advantageously made of metal and/or composite material, which lays on the ground by means of a plurality of ground resting wheels advantageously tyred, and is provided with a passenger compartment structured and dimensioned so as to accommodate the driver of the vehicle (i.e. the person driving the road vehicle) and preferably also at least one passenger advantageously located beside the same driver; and a powertrain 102, which is located on the vehicle body 101, includes the electric motor 1, and is adapted to drive into rotation at least one of the ground resting wheels.

In addition, the road vehicle 100 further comprises: a battery pack 103 advantageously of a rechargeable type, which is located on the vehicle body 101 and is capable of storing, within itself, a certain amount of electric energy to be supplied to the powertrain 102, or rather to the electric motor 1; and an electrical power-supply unit 104, which is located on the vehicle body 101, is interposed between the battery pack 103 and the powertrain 102, and is adapted to control/regulate the flow of electric energy towards the powertrain 102, or rather towards the electric motor 1 of powertrain 102, advantageously as a function of the commands given by the vehicle driver.

More in detail, the road vehicle 100 is preferably provided with a motor-control unit 105, which receives and processes the commands given by the vehicle driver and controls the electrical power-supply unit 104 according to the same commands.

Preferably, the road vehicle 100 is finally also provided with a battery-charger module 106, which is located on the vehicle body 101 and is adapted to recharge the battery pack 103 when the road vehicle 100 is connected to an external electric-energy source.

Clearly, the powertrain 102 and/or the battery pack 103 and/or the electrical power-supply unit 104 and/or the motor-control unit 105 and/or the battery-charger module 106 is/are advantageously accommodated within the vehicle body 101.

In addition, the electric motor 1 is an alternating-current electric motor of the polyphase (three-phase) type.

The electrical power-supply unit 104, in turn, is preferably adapted to transform the direct-current electric energy arriving from the battery pack 103 into alternating-current electric energy suitable for the powertrain 102, or rather suitable for the electric motor 1.

Preferably, the electric motor 1 may also operate as an electric generator.

In other words, the electric motor 1 is preferably an auto-traction electrical machine of reversible type, i.e. an electrical machine that can function either as an electric motor by absorbing electrical energy and generating a mechanical driving torque, or as an electrical generator by absorbing mechanical energy and generating electrical energy.

The electrical power-supply unit 104, in turn, is preferably structured so as to control the flow of electric energy from the battery pack 103 to the electric motor 1 and vice versa.

In other words, the electrical power-supply unit 104 is preferably a static electric-energy conversion unit of a bidirectional type.

With reference to Figure 1, in the example shown, in particular, the vehicle body 101 is preferably oblong in shape and preferably lays on the ground via at least one pair of front wheels 107 and at least one pair of rear wheels 108.

Preferably, the front wheels 107 and the rear wheels 108 are moreover located in pairs on opposite sides of the vehicle vertical midplane, substantially at the vertices of a rectangle or of an isosceles trapezoid. Furthermore, the passenger compartment of the vehicle body 101 is preferably located between the front wheels 107 and the rear wheels 108.

In addition, the front wheels 107 are preferably idle and steerable, while the rear wheels 108 are preferably drive and optionally also steerable.

Preferably, the powertrain 102, or rather the electric motor 1, is thus adapted to drive into rotation only the rear wheels 108.

In a different embodiment, however, the front wheels 107 could be drive wheels in addition to, or in place of, the rear wheels 108.

In other words, the road vehicle 1 is preferably a car, i.e. a motor vehicle for private transportation of persons.

With reference to Figure 1, in the example shown, in particular, the powertrain 102 is preferably located in the rear part of the vehicle body 101, and comprises the electric motor 1 and advantageously also a gear reducer 109, which mechanically connects the electric motor 1 to the driving wheels of the vehicle, or rather to the rear wheels 108, so that they can be driven into rotation.

In other words, the gear reducer 109 is interposed between the electric motor 1 and the drive wheels of the vehicle, or rather the rear wheels 108.

Optionally, the powertrain 102 could also comprise an internal combustion engine, which is adapted to drive into rotation the drive wheels of the vehicle, or rather the rear wheels 108, in combination with, or in place of, the electric motor 1.

With reference to Figure 1, on the other hand, the battery pack 103 is preferably located in the front part of the vehicle body 101.

The battery pack 103, in addition, preferably has a nominal capacity greater than or equal to 50 kWh and/or a nominal voltage greater than 600 volts or, more conveniently, equal to about 800 volts.

In other words, the battery pack 103 is preferably a high-voltage battery pack.

The electrical power-supply unit 104, in turn, is preferably located adjacent to the powertrain 102. Preferably, the electrical power-supply unit 104 moreover includes at least one electronically-controlled power inverter, advantageously of a bidirectional type, which is interposed between the battery pack 103 and the powertrain 102, or rather the electric motor 1, and is adapted to transform the direct-current electric energy arriving from the battery pack 103 into alternating-current electric energy suitable for the electric motor 1, preferably while varying its frequency and/or voltage according to signals from the motor-control unit 105.

The battery-charger module 106, on the other hand, is preferably located/accommodated in the front part of the vehicle body 101, close to the battery pack 103, and interposes itself between the battery pack 103 and said external electric-energy source. The battery-charger module 106 is adapted to control the flow of electric energy from the external electric-energy source to the battery pack 103, so as to recharge the battery pack 103 preferably in the shortest possible time and advantageously while preserving the structural integrity of said battery pack 103.

The external electric-energy source may be, for example, a known charging station for road vehicles or the traditional domestic power grid.

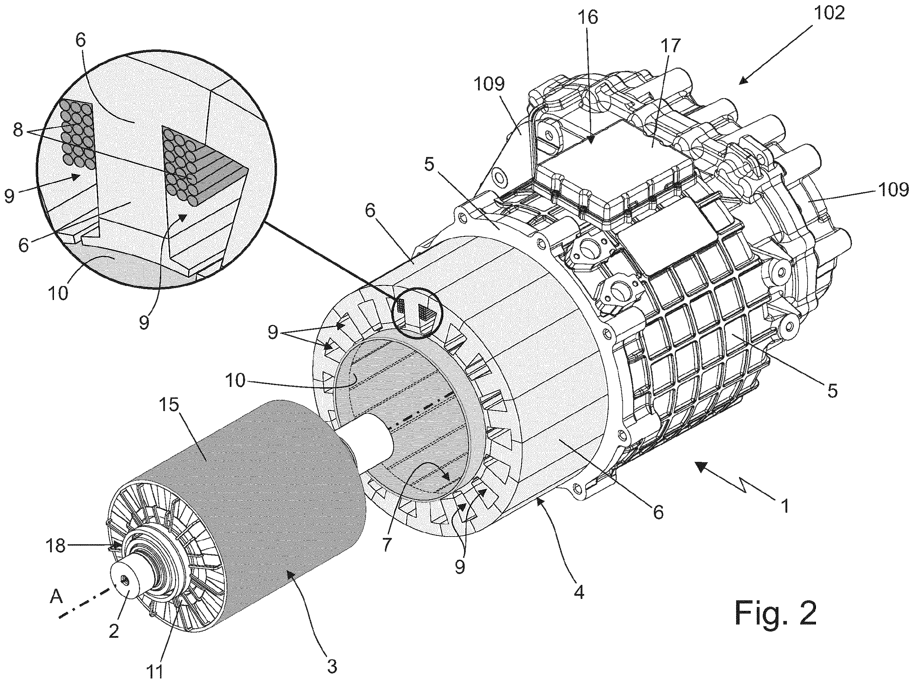

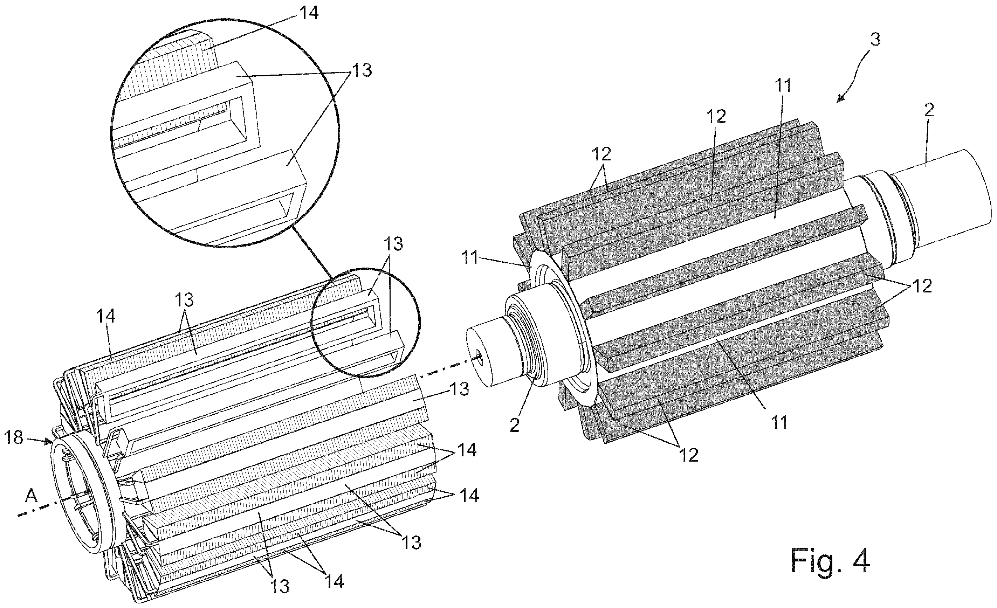

With reference to Figures 2, 3 and 4, electric motor 1, on the other hand, is an alternating-current (three-phase) radial-flux electric motor.

In other words, the electric motor 1 is conventionally provided with a fixed part or stator, which is internally hollow and is adapted to generate a rotating magnetic field when electric current is flowing through it; and with a moving part or rotor, which is accommodated within the stator in axially rotatable manner and with clearance, so as to be driven into rotation around its longitudinal axis by the magnetic field generated by the stator.

The rotor and stator therefore delimit between themself an annular-shaped gap, traditionally called air gap, which has a reduced thickness to maximise the magnetic-field intensity but nevertheless allow the rotor to freely rotate without touching the stator.

More in detail, the electric motor 1 comprises a central drive shaft 2, which is capable of rotating about its central /longitudinal axis A; a rotor 3 advantageously approximately cylindrical in shape, which extends coaxial to longitudinal axis A and is rigidly fitted onto the drive shaft 2 so as to rotate together with the latter; and a stator 4 with a substantially annular structure, which is provided with a large, substantially rectilinear, central cavity that extends coaxial to the longitudinal axis A, is advantageously substantially cylindrical in shape, and accommodates the rotor 3.

Preferably, the electric motor 1 is moreover provided with a rigid outer casing 5, oblong in shape and internally hollow, which is preferably made of metal material advantageously of the non-magnetic type, and is structured so as to accommodate within itself the stator 4, the rotor 3 and the drive shaft 2, and is preferably also provided with an opening, through which one end of the drive shaft 2 surfaces or juts out cantilevered outside the same rigid casing 5.

In the example shown, in particular, the end of the drive shaft 2 is preferably adapted to be mechanically connected to the gear reducer 109.

With reference to Figure 2, in particular the stator 4 preferably comprises: an outer core or joke 6 advantageously substantially rectilinear tubular in shape, which preferably has ferromagnetic behaviour and is provided with an advantageously substantially cylindrical, large central cavity 7 that extends parallel, or rather coaxial to the longitudinal axis A, and is engaged in axially rotatable manner and with clearance by the rotor 2; and a series of electrical conductors 8, which are located inside special longitudinal housing slots 9, traditionally called stator slots, which are substantially parallel to one another and are suitably distributed on the inner surface of the joke 6 delimiting the central cavity 7.

More in detail, the stator slots 9 are preferably substantially evenly distributed around the longitudinal axis A. Preferably the stator cavities 9 extend into the joke 6 parallel to axis A, advantageously for the entire length of joke 6.

Preferably, the stator 4 furthermore comprises a tubular sleeve 10 advantageously substantially cylindrical in shape, which is made of polymeric material and is fitted inside the central cavity 7 of joke 6, so as to separate/isolate, fluid-tight, the stator slots 9 from the central cavity 7.

When electric current flows through them, the electrical conductors 8 are adapted to generate, within the central cavity 7, a radial magnetic field.

More in detail, the electrical conductors 8 are suitably connected to each other so as to form a series of electrical windings that are distributed around the central cavity 7 and are adapted to generate, when travelled by an electric current, a radial magnetic field.

The electrical power-supply unit 104, in turn, is adapted to circulate alternating electric current in the electrical windings formed by the electrical conductors 8, so as to generate a rotating magnetic field.

The structure of stator 4 is of a conventional type and therefore won't be further described.

With reference to Figures 2, 3 and 4, on the other hand, the rotor 3 comprises permanent magnets. Electric motor 1, therefore, is preferably a synchronous electric motor with permanent magnets.

More in detail, the rotor 3 comprises: a central core 11 preferably substantially cylindrical in shape, which advantageously has a ferromagnetic behaviour, and extends coaxial to longitudinal axis A; and a series of permanent magnets 12, which are suitably distributed along the periphery of central core 11, so as to create a radial magnetic field that interacts in a known manner with the magnetic field generated by stator 4, or rather by the electrical conductors 8 of stator 4.

In particular, the central core 11 of rotor 3 is preferably rigidly fitted onto the drive shaft 2 or is made in one piece with drive shaft 2, so as to rotate together with the latter.

The permanent magnets 12, on the other hand, are rigidly fixed on or in the central core 11, at the periphery thereof. The permanent magnets 12, moreover, are preferably substantially evenly spaced around the longitudinal axis A.

Preferably, each permanent magnet 12 furthermore is oblong in shape and is advantageously arranged parallel to longitudinal axis A.

More in detail, each permanent magnet 12 is preferably straight oblong in shape and extends parallel to longitudinal axis A, advantageously for substantially the entire axial length of central core 11.

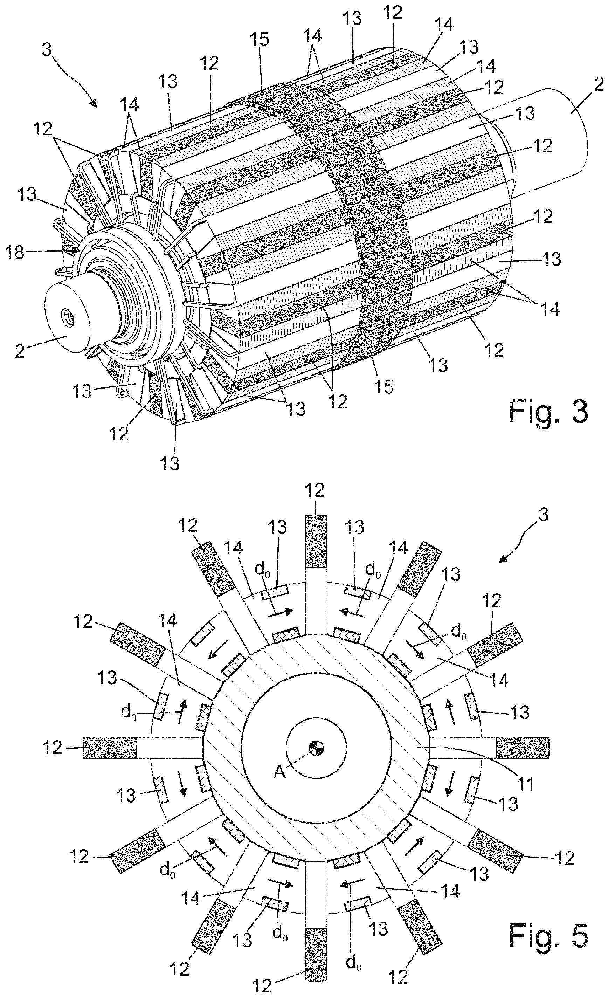

With particular reference to Figure 5, moreover, each permanent magnet 12 is located on the central core 11 so that its magnetic field is radially oriented. In addition, each permanent magnet 12 is preferably also oriented so as to create an entering or exiting radial magnetic field opposite to that generated by the two immediately adjacent permanent magnets 12.

In the example shown, in particular, the central core 11 preferably basically comprises a stack of ferromagnetic-material laminations closely juxtaposed to one another.

The permanent magnets 12, in turn, are preferably made of a rare-earth elements alloy (e.g. an alloy of Neodymium, Iron and Boron), and are preferably fixed resting on the outer surface of central core 11.

In other words, the permanent magnets 12 are preferably located outside the central core 11, contiguous to the latter.

Clearly, the permanent magnets 12 could also be located within specific housing seats realized inside the central core 11, advantageously close to the outer surface of the central core 11.

With reference to Figures 3, 4 and 5, in addition, the permanent magnets 12 are circumferentially spaced to one another, and the rotor 3 additionally comprises a series of supplementary electric coils 13, which are distributed on the periphery of central core 11 so as to be interspersed with the various permanent magnets 12, and are oriented so that each supplementary coil 13 generates, when travelled by an electric current, a locally tangential magnetic field.

In other words, each supplementary coil 13 is oriented so as to generate a magnetic field which, within the coil, is substantially parallel to a direction d₀ which lies on a plane substantially orthogonal to the longitudinal axis A and is locally substantially tangential to the periphery of the central core 11, so as to intersect the two permanent magnets 12 flanking the same supplementary coil 13.

Preferably, moreover, each supplementary coil 13 is oblong in shape and extends between the two permanent magnets 12 flanking the same coil substantially parallel to the said magnets, advantageously substantially for the entire axial length of the same permanent magnets 12.

In other words, each supplementary coil 13 is oblong in shape and extends parallel to the longitudinal axis A advantageously substantially for the entire axial length of the central core 11 and/or of the permanent magnets 12.

Preferably, the rotor 3 moreover comprises, for each supplementary coil 13, also a supplementary magnetic core 14, which has ferromagnetic behaviour and is located between the two permanent magnets 12 flanking the supplementary coil 13, so as to locally strengthen the tangential magnetic field produced by the supplementary coil 13.

In more detail, each supplementary magnetic core 14 is preferably shaped so as to take up substantially the entire space between two consecutive permanent magnets 12.

In other words, each supplementary magnetic core 14 is preferably oblong in shape and extends between the two flanking permanent magnets 12 substantially parallel to the latter, advantageously substantially for the entire axial length of the same permanent magnets 12.

Preferably, each supplementary coil 13 is moreover looped around the respective supplementary magnetic core 14. In other words, the electrical conductors forming the supplementary coil 13 are looped around the supplementary magnetic core 14.

In the example shown, in particular, each supplementary coil 13 is preferably substantially elongated rectangular in shape and its laying plane is arranged radially.

In other words, the laying plane of the supplementary coil 13 belongs to a sheaf of planes intersecting at the longitudinal axis A.

Moreover, the electrical conductive material wires forming the supplementary coil 13 are looped so as to form a multitude of coils lying in substantially radial planes.

The supplementary magnetic core 14, on the other hand, preferably comprises a stack of ferromagnetic-material laminations closely juxtaposed to one another.

With reference to Figures 2, 3, 6 and 7, preferably the stator 3 finally also comprises an outer jacket 15 with an advantageously rigid, tubular structure, which is fitted onto the magnetic core 11 so as to cover and protect, advantageously seamlessly, the permanent magnets 12, the supplementary coils 13 and the supplementary magnetic cores 14, if any.

More in detail, the outer jacket 15 is preferably substantially cylindrical tubular in shape, and extends coaxial to longitudinal axis A around the magnetic core 11, advantageously substantially for the entire axial length of magnetic core 11.

Preferably, the outer jacket 15 is finally made of a plastic or composite material.

With reference to Figures 2, 3 and 4, the electric motor 1 additionally comprises an electrical power-supply assembly 16, which is adapted to circulate, on command, electric current (direct current) within the various supplementary coils 13 of rotor 3, preferably also controlling the intensity of said electric current.

More in detail, the electrical power-supply assembly 16 is preferably interposed between the various supplementary coils 13 of rotor 3 and the battery pack 103, and is adapted to control/regulate the flow of electric energy towards the supplementary coils 13 advantageously as a function of certain operating parameters of electric motor 1.

Even more specifically, the electrical power-supply assembly 16 is preferably adapted to control/regulate the flow of electric energy towards the supplementary coils 13 according to signals arriving from the motor-control unit 105 and/or the power-supply unit 104.

In the example shown, in particular, the electrical power -supply assembly 16 preferably comprises a supplementary electrical power-supply unit 17, which is interposed between the supplementary coils 13 of rotor 3 and the battery pack 103, and is adapted to transform, on command, the direct-current electric energy arriving from the battery pack 103 into direct-current electric energy suitable for the supplementary coils 13.

In other words, the supplementary power supply unit 17 is adapted to adjust voltage and/or current of the electric energy coming from battery pack 103, to the specifications of the supplementary coils 13 of rotor 3.

Preferably, the supplementary power-supply unit 17 is moreover adapted to be commanded by the motor-control unit 105.

With reference to Figures 2, 3 and 4, in addition the supplementary electrical power-supply unit 17 is preferably located on the outer casing 5, and the rotor 3 preferably moreover comprises a slip-ring electrical connection 18, which is preferably fitted on the drive shaft 2, beside the central core 11, and is adapted to connect the supplementary coils 13 to the supplementary electrical power-supply unit 17, so as to allow electric current to travel to and from the supplementary coils 13.

In the example shown, in particular, the supplementary coils 13 are preferably connected in parallel to the slip-ring electrical connection 18.

Clearly, the supplementary coils 13 could also be connected in series.

General operation of electric motor 1 and of road vehicle 100 are easily inferable from the foregoing and require no further explanation.

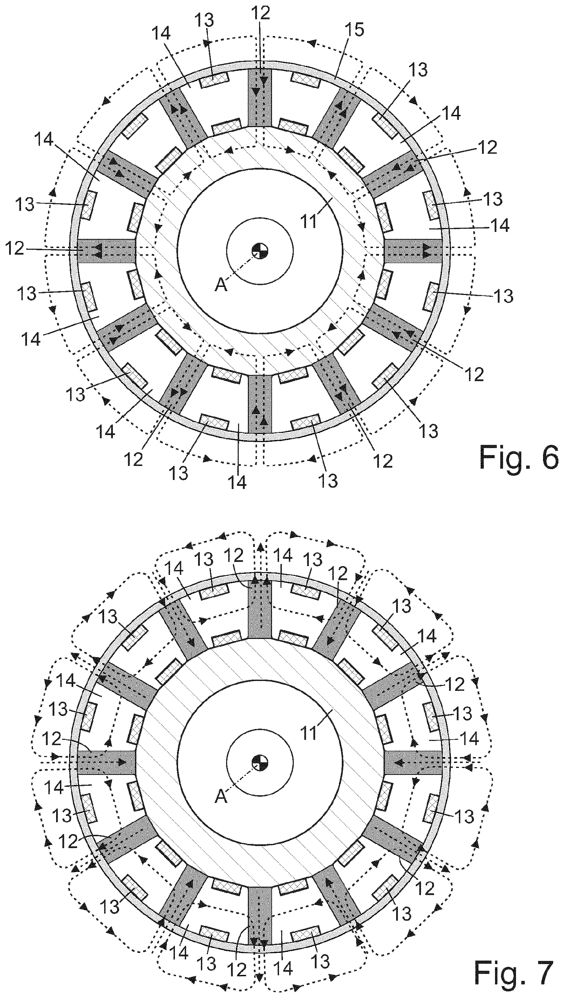

As regards instead operation of rotor 3, with reference to Figure 6, if the supplementary coils 13 are de-energised, the magnetic field in the area of the air gap is determined by solely the permanent magnets 12, thus the magnetic field lines close in the traditional manner, affecting the central core 11 of rotor 3.

With reference to Figure 7, by powering the supplementary coils 13 with the appropriate current, it is possible to realise on the periphery of rotor 3 a Halbach configuration, which significantly increases the magnetic-field strength in the area of the air gap, optionally also minimising the magnetic-field strength in the area of central core 11.

In this configuration, electric motor 1 is thus able to deliver more torque and/or power.

Clearly, the intensity of the electric current circulating in the supplementary coils 13 of rotor 3 can be varied so as to change the shape of the magnetic-field lines in the air gap area of electric motor 1.

For example, the electric current circulating in the supplementary coils 13 may be reversed or annulled so as to reduce the magnetic field in the area of the air gap.

The advantages connected with the particular structure of the rotor 3 of electric motor 1 are remarkable.

Firstly, the presence of supplementary coils 13 allows, if necessary, a rotor with permanent magnets in Halbach configuration to be realized, without however having the assembly and premature-demagnetisation problems traditionally related to the Halbach configuration.

In addition, the presence of supplementary coils 13 allows a better operation of electric motor 1 in presence of partial loads, with the greater efficiency that this entails.

Last but not less important, the presence of supplementary coils 13 allows optimisation of the electric-motor behaviour in defluxing conditions, such as when the electric motor 1 is requested to operate at constant power while simultaneously increasing the motor rotation speed.

Finally, it is clear that modifications and variations may be made to the electric motor 1 and the road vehicle 100 without however departing from the scope of the present invention.

For example, in the space between two consecutive permanent magnets 12 there could be located a plurality of supplementary electric coils 13 aligned one after the other so as to form a row of coils parallel to the longitudinal axis A.

In addition, the supplementary electric coils 13 forming each row of coils (i.e. the supplementary electric coils 13 that are located between the same pair of consecutive permanent magnets 12) may be powered in a separate and distinctive manner from one another.

## Claims

1. An electric motor (1) for auto-traction comprising: a stator (4) that is adapted to generate a rotating magnetic field when travelled by an electric current; and a rotor (3), which is accommodated in axially rotatable manner and with clearance in the stator (4) so as to be driven into rotation by the latter about its longitudinal axis (A);
said rotor (3) comprising: a central core (11), which extends coaxial to said longitudinal axis (A) and is capable of rotating about said longitudinal axis (A); and a series of permanent magnets (12) that are distributed along the periphery of said central core (11), so as to create a radial magnetic field;
the electric motor (1) being **characterised in that** said rotor (3) additionally comprises a series of supplementary electric coils (13), which are distributed on the periphery of said central core (11) so as to be interspersed between said permanent magnets (12), and are oriented so that each supplementary electric coil (13) generates, when travelled by an electric current, a tangential magnetic field.

2. Electric motor according to Claim 1, wherein the rotor (3) moreover comprises, for each supplementary electric coil (13), a supplementary magnetic core (14) which has a ferromagnetic behaviour and is arranged between the two permanent magnets (12) flanking the same supplementary electric coil (13), so as to locally intensify the tangential magnetic field produced by said supplementary electric coil (13).

3. Electric motor according to Claim 2, wherein the supplementary magnetic core (14) is shaped so as to take up substantially the entire space between two consecutive permanent magnets (12).

4. Electric motor according to Claim 2 or 3, wherein the additional magnetic core (14) comprises a stack of ferromagnetic-material laminations juxtaposed to one another.

5. Electric motor according to any one of the preceding claims, **characterised by** additionally comprising an electrical power-supply assembly (16), which is adapted to circulate, on command, electric current within said supplementary electric coils (13).

6. Electric motor according to Claim 5, wherein the electrical power-supply assembly (16) comprises an electrical power-supply unit (17), which is interposed between said supplementary electric coils (13) and the vehicle battery pack (103), and is adapted to convert, on command, the direct-current electric energy arriving from said battery pack (103) into direct-current electric energy suitable for the supplementary electric coils (13).

7. Electric motor according to Claim 6, wherein the rotor (3) moreover comprises a slip-ring electrical connection (18), which connects the supplementary electric coils (13) to said electrical power-supply unit (17), so as to allow the passage of electric current to and from the same supplementary electric coils (13).

8. Electric motor according to Claim 6, **characterised by** also comprising a rigid outer casing (5) that accommodates inside itself the stator (4) and the rotor (3); said electrical power-supply unit (17) being located on said rigid outer casing (5).

9. Electric motor according to any one of the preceding claims, wherein the permanent magnets (12) are oblong in shape and extend parallel to said longitudinal axis (A).

10. Electric motor according to Claim 9, wherein each supplementary electric coil (13) is oblong in shape and extends between the permanent magnets (12) flanking the same coil substantially parallel to said permanent magnets (12).

11. Electric motor according to Claim 9 or 10, wherein each supplementary electric coil (13) is substantially elongated rectangular in shape and its lying plane is arranged radially.

12. A road vehicle (100) provided with ground-resting wheels (107, 108) and comprising: an electric- or hybrid-powertrain (102), which is adapted to drive into rotation at least one of said ground-resting wheels (107, 108); a battery pack (103), which is capable of storing inside itself a given amount of electric energy to be supplied to said powertrain (102); and a main electrical power-supply unit (104), which is adapted to regulate the flow of electric energy from the battery pack (103) to the powertrain (102), according to the commands given by the vehicle driver;
the road vehicle (100) being **characterised in that** said powertrain (102) comprises an electric motor (1) realized according to any one of the preceding claims.
